Europäisches Patentamt

European Patent Office

Office européen des brevets

(19)

(11) **EP 1 133 098 A1**

(12) **EUROPÄISCHE PATENTANMELDUNG**

(43) Veröffentlichungstag:
   **12.09.2001  Patentblatt 2001/37**

(51) Int Cl.$^7$: **H04L 7/033**, H04L 27/227,
   H04L 27/233

(21) Anmeldenummer: **00104808.1**

(22) Anmeldetag: **06.03.2000**

(84) Benannte Vertragsstaaten:
   **AT BE CH CY DE DK ES FI FR GB GR IE IT LI LU
   MC NL PT SE**
   Benannte Erstreckungsstaaten:
   **AL LT LV MK RO SI**

(71) Anmelder: **ABB RESEARCH LTD.**
   **8050 Zürich (CH)**

(72) Erfinder: **Dzung, Dacfey**
   **5430 Wettingen (CH)**

(74) Vertreter: **ABB Patent Attorneys**
   **c/o ABB Business Services Ltd,**
   **Intellectual Property (SLE-I),**
   **Haselstrasse 16/699**
   **5401 Baden (CH)**

(54) **Verfahren zur Synchronisation eines in DPSK modulierten Signals**

(57)    Zur Synchronisation eines DPSK Signals y wird dieses zuerst mit cos(2*pi*f*t) bzw. sin(2*pi*f*t) multipliziert und durch Tiefpassfilter (3a, 3b) geschickt, wobei f die Trägerfrequenz ist. Aus den so erhaltenen Signalen y2r und y2i wird der Wert w(t) = y2i(t)*y2r(t-T) - y2r(t)*y2i(t-T) berechnet, wobei T die Symbollänge des Signals ist. Der Wert w(t) wird mit hoher Zeitauflösung ermittelt und kann sodann mittels bekannter Techniken zur Synchronisation verwendet werden.

**Fig. 1**

EP 1 133 098 A1

**Beschreibung**

Technisches Gebiet

Die Erfindung betrifft ein Verfahren zur Synchronisation eines in DPSK modulierten Signals gemäss Oberbegriff von Anspruch 1.

Stand der Technik

Bei der Modulationsart DPSK (Differential Phase Shift Keying) handelt es sich um ein Modulationsverfahren, bei welchem die Phase des zu modulierenden Signals abhängig von den zu übertragenden Daten geändert wird. Das Signal wird in Abschnitte unterteilt, wobei jeder Abschnitt einem zu übertragenden Symbol zugeordnet wird. Der Phasensprung zwischen den Abschnitten ist eine Funktion des Werts dieses Symbols.

Beim Empfang eines derartigen Signals muss zuerst eine Synchronisation durchgeführt werden, damit die Taktphase ermittelt werden kann bzw. die Positionen der einzelnen Abschnitte identifiziert werden können. Bei einer paketweisen Übertragung wird deshalb jedem Paket eine Synchronisationssequenz vorangestellt. Das empfangene Signal wird sodann heruntergemischt und die Korrelation mit der Synchronisationssequenz wird berechnet. Aus einer Korrelationsspitze kann sodann die Position der Synchronisationssequenz und somit die Takt-Phasenverzögerung ermittelt werden.

Diese Art der Synchronisation erfordert jedoch verschiedene zusätzliche Auswertungsschritte.

Darstellung der Erfindung

Es stellt sich deshalb die Aufgabe, ein Verfahren der eingangs genannten Art bereitzustellen, welches eine möglichst einfache und zuverlässige Synchronisation des empfangenen Signals erlaubt.

Diese Aufgabe wird vom Verfahren gemäss Anspruch 1 gelöst.

Erfindungsgemäss wird also der Wert w(t) gemäss Formel von Anspruch 1 bestimmt. Nach erfolgreicher Synchronisation kann der gleiche Wert für die Demodulation des Signals verwendet werden, was die Auswertung vereinfacht. Für die Synchronisation und die Bestimmung der Takt-Phasenverzögerung wird der Wert w(t) verwendet. Hierzu können bekannte Verfahren eingesetzt werden.

Beispielsweise kann zur Synchronisation ein sog. "eye-diagram" verwendet werden, bei welchem die Phasenverzögerung aus der Streuung von w(t) in Abhängigkeit von t mod T abgeleitet wird. Es ist auch möglich, Synchronisationssequenzen in das Signal einzubauen, deren Position mittels Korrelationsverfahren aus w(t) ermittelt werden kann.

Um eine gute Auflösung der Phasenverzögerung zu erreichen, sollten die Länge T der Symbole wesentlich grösser als der Zeitabstand dt zwischen der Messung zweier Werte w(t) sein.

Erfolgt die Synchronisation über Synchronisationssequenzen, so kann vom Umstand profitiert werden, dass w(t) im Gegensatz zu anderen, normalerweise zur Synchronisation verwendeten Werten, keine Vorzeichenumkehr zeigen kann. Dies erlaubt die Wahl besserer Synchronisationssequenzen.

Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:

Fig. 1 ein Blockschaltbild eines Empfängers,
Fig. 2 ein empfangenes Signal und die entsprechenden Werte w(t) und s(t),
Fig. 3 das "eye-diagram" für das Signal w von Fig. 2,
Fig. 4 eine Korrelationsfunktion und das entsprechende Korrelationssignal für das Signal w von Fig. 2 und
Fig. 5 das Autokorrelationssignal einer konventionellen Synchronisationssequenz und einer erfindungsgemässen Synchronisationssequenz.

Weg zur Ausführung der Erfindung

Im DPSK-Verfahren wird zur Übertragung von Symbolen $\{x_i\}$ ein Signal

$$y(t) = \cos(2\pi f_c t + \varphi(t)), \tag{1}$$

mit einer Trägerfrequenz $f_c$ und einer Träger-Phasenverschiebung $\varphi(t)$, in Abschnitte i einer Länge T unterteilt. Jedem Abschnitt i wird eine Phasenverschiebung $\varphi_i$ zugeordnet, die gegeben ist durch

$$\varphi_i = \varphi_{i-1} + \lambda + F(x_i), \tag{2}$$

wobei F eine Funktion des Symbols $x_i$ und $\lambda$ eine Konstante ist. Die Konstante $\lambda$ wird üblicherweise gleich 0 oder $\pi/2$ gesetzt.

Wenn ein Symbol $x_i$ die Werte 0 oder 1 einnehmen kann, so wird die Funktion $F(x_i)$ beispielsweise gewählt als

$$F(x_i) = \pi \cdot x_i. \tag{3}$$

Zur Übertragung von binären Symbolen $x_i = 0$ oder 1 ist $F(x_i)$ in diesem Fall gleich $\pi \cdot x_i \cdot$

Wird das Signal an einen Empfänger übermittelt, so erfährt es eine Verzögerung, welche am Ort des Empfängers a priori unbekannt ist, d.h. der Empfänger sieht ein Signal $y(t+\tau)$ mit einer Takt-Phasenverzögerung $\tau$, welche die Phasendifferenz zwischen einem internen Taktgeber des Empfängers und dem Takt des empfangenen Signals ausdrückt. Damit das Signal dekodiert werden kann, muss die Takt-Phasenverzögerung $\tau$ in einer Synchronisation bestimmt werden.

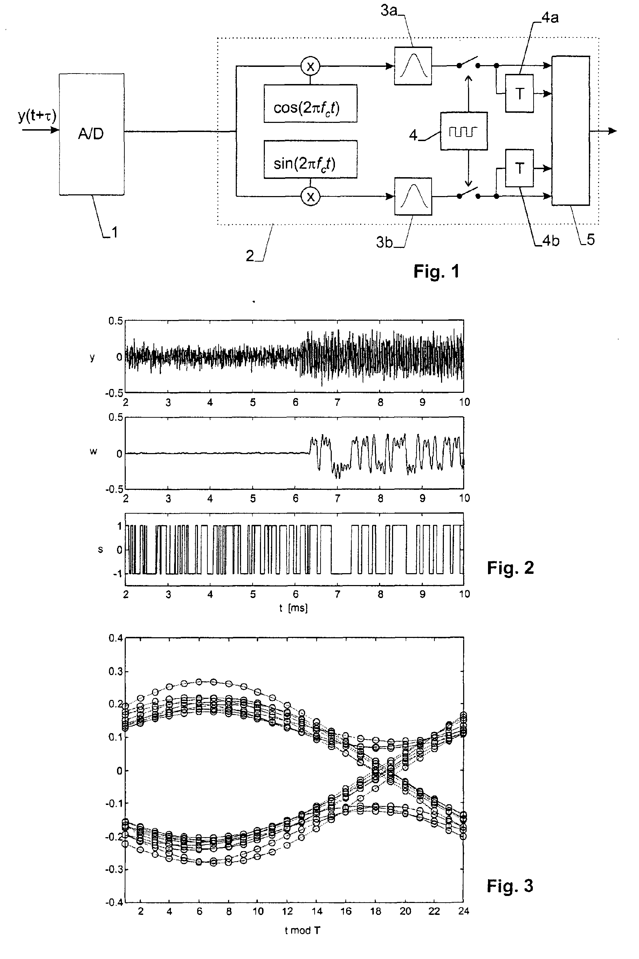

Fig. 1 zeigt eine Schaltung zur Synchronisation und Demodulation DPSK-Signals. Diese besitzt einen A/D-Wandler 1, der das ankommende Signal $y(t+\tau)$ digitalisiert, so dass die folgenden Funktionsblöcke des Demodulators 2 in Digitaltechnik implementiert sein können, entweder als physisch getrennte Funktionseinheiten oder als Teil eines Demodulationsprogramms eines Rechners. Es ist allerdings auch denkbar, die Funktionseinheiten des Demodulators 2 mindestens teilweise in Analogtechnik aufzubauen.

Die Verarbeitungsrate 1/dt des A/D-Wandlers 1 sowie der nachfolgenden Stufen ist wesentlich grösser als die Symbolrate, d.h. dt << T.

Das Signal y vom A/D-Wandler 1 wird mit $\cos(2\pi f_c t)$ bzw. $\sin(2\pi f_c t)$ multipliziert, um zwei Signale ylr und yli zu erzeugen. Diese werden durch zwei Tiefpassfilter 3a, 3b geführt, die eine Übertragungsfunktion FP aufweisen. Die Durchlassbreite der Tiefpassfilter 3a, 3b entspricht etwa der Bandbreite des Signals y(t). Insbesondere werden harmonische Komponenten der Frequenz $2f_c$ herausgefiltert. Die so erzeugten Signale y2r und y2i sind also

$$y2r(t) = LP(y(t+\tau) \cdot \cos(2\pi f_c t)) = \cos(\varphi(t+\tau) + 2\pi f_c \tau), \tag{4}$$

$$y2i(t) = LP(y(t+\tau) \cdot \sin(2\pi f_c t)) = \sin(\varphi(t+\tau) + 2\pi f_c \tau).$$

Der Wert der Takt-Phasenverzögerung $\tau$ wird mit dem weiter unten beschriebenen Synchronisationsverfahren bestimmt. Sobald $\tau$ bekannt ist, kann zur weiteren Auswertung wird wie folgt verfahren werden.

Ein Taktgeber 4 mit der Taktrate 1/T und aufgrund des Werts von $\tau$ so synchronisiert, dass er mit den ankommenden Symbolen in Phase ist, wird verwendet, um Signale $u_i$ und $v_i$ zu erzeugen, welche die Phasenverschiebung $\varphi_i$ für jedes Symbol wiedergeben:

$$u_i = \cos(\varphi_i + 2\pi f_c \tau),$$

$$v_i = \sin(\varphi_i + 2\pi f_c \tau). \tag{5}$$

Diese Signale werden direkt und über Verzögerungsglieder 4a, 4b mit einer Verzögerung gleich der Symbollänge T einer Rechenstufe 5 zugeführt, welche (bis auf eine Normierung) die Werte $w_i$ berechnet:

$$w_i = \cos(\lambda) \cdot (u_i \cdot u_{i-1} + v_i \cdot v_{i-1}) + \qquad (6)$$
$$\sin(\lambda) \cdot (v_i \cdot u_{i-1} - u_i \cdot v_{i-1}) \text{ und}$$
$$x_i = (N-1) \cdot (1-w_i)/2$$

(6) eliminiert die unbekannte Trägerphase $2\pi f_c \tau$.

Für binäre Symbole $x_i$ und einen Wert $\lambda = 90°$ vereinfacht sich dies zu

$$w_i = u_i \cdot v_{i-1} - v_i \cdot u_{i-1}$$

$$x_i = \text{sign}(w_i), \qquad (7)$$

wobei "sign" die Vorzeichenoperation bezeichnet, welche für positive Zahlen den Wert 1 und für negative Zahlen den Wert 0 liefert.

Zur Einstellung der Taktphasenlage des Empfängers muss, wie oben erwähnt, die Takt-Phasenverzögerung $\tau$ bekannt sein. Hierzu werden die folgenden Synchronisationsschritte durchgeführt.

In einem ersten Schritt wird der Wert

$$w(t) = \cos(\lambda) \cdot (y2r(t) \cdot y2r(t-T) + y2i(t) \cdot y2i(t-T)) +$$

$$\sin(\lambda) \cdot (y2i(t) \cdot y2r(t-T) - y2r(t) \cdot y2i(t-T)) \qquad (8)$$

berechnet. Dies entspricht im wesentlichen dem Wert $w_i$ aus Gleichung (6), die Berechnung erfolgt jedoch quasi zeitkontinuierlich, d.h. z.B. für jeden vom A/D-Wandler 1 ermittelten Messwert. Die Zeitabstände dt zwischen den nach Gleichung (8) ermittelten Werten sind also viel kleiner als die Symbollänge T, d.h. dt << T.

Für $\lambda = 90°$ vereinfacht sich Gleichung (8) und $w(t)$ kann berechnet werden aus

$$w(t) = y2i(t) \cdot y2r(t-T) - y2r(t) \cdot y2i(t-T). \qquad (9)$$

Fig. 2 zeigt ein mögliches, mit Rauschen überlagertes Signal $y(t+\tau)$, den entsprechenden Wert $w(t)$ und das Vorzeichen $s(t)$ des Werts $w(t)$. Wie sich daraus zeigt, gibt der Wert $w(t)$ das Signal wieder, und er eignet sich deshalb sehr gut zur Synchronisation, d.h. zur Bestimmung der Takt-Phasenverzögerung T.

Deshalb wird der Wert $w(t)$ nun in einem nächsten Schritt zur Synchronisation verwendet. Hierzu können verschiedene Synchronisationstechniken verwendet werden, welche ursprünglich entwickelt wurden, um zeitkontinuierliche oder quasi-zeitkontinuierliche Signale zu synchronisieren, die in anderer Weise als $w(t)$ berechnet wurden.

Zwei bevorzugte Synchronisationstechniken werden im folgenden beschrieben.

"Augendiagramme":

Bei dieser Technik wird $w(t)$ abhängig von t mod T analysiert, indem geprüft wird, für welches t mod T die Werte $w(t)$ eine minimale oder maximale Streuung besitzen. Ein entsprechender Graph ist in Fig. 3 dargestellt. Die maximale Öffnung des "Auges" bzw. der Ort der grössten Streuung kennzeichnet den Wert der Takt-Phasenverzöge-rung $\tau$.

Synchronisationssequenzen:

Bei Übertragung der Daten in Paketen wird der Anfang jedes Pakets mit einer Synchronisationssequenz gekennzeichnet. Zur Synchronisation wird nun der Wert $w(t)$ mit dieser Synchronisationssequenz, dargestellt als positive oder negative $\delta$-Pulse, korreliert. Eine Spitze im Korrelationssignal kennzeichnet den Start eines Datenpakets.

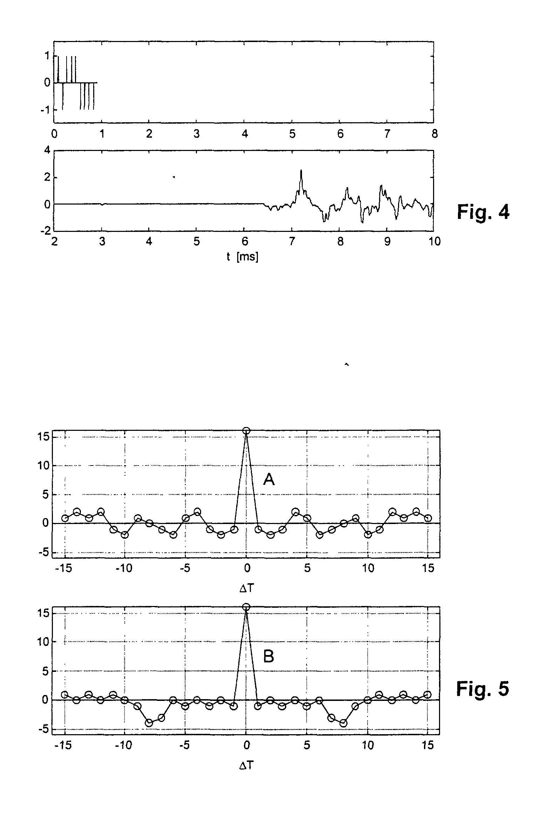

Dies ist in Fig. 4 dargestellt, wobei der obere Graph das zur Korrelation verwendete Signal und der untere Graph das daraus berechnete Korrelationssignal zeigt.

Bei dieser Technik muss eine geeignete Synchronisationssequenz gewählt werden.

In konventionellen Synchronisationsverfahren wird die Synchronisationssequenz so gewählt, dass das positive und das negative Autokorrelationsmaximum der Sequenz minimal ist, d.h. der grösste Wert der Beträge der Autokorrelationswerte ausserhalb von Null ist minimal. Es müssen also auch negative Autokorrelationsmaxima berücksichtigt werden, da in konventionellen Modulations- und Demodulationsverfahren eine Vorzeichenumkehr stattfinden kann.

Beim hier beschriebenen Synchronisationsverfahren kann eine derartige Vorzeichenumkehr jedoch ausgeschlossen werden. Deshalb genügt es, die positiven Autokorrelationswerte der Synchronisationssequenz ausserhalb von 0 zu betrachten. Dies ist in Fig. 5 dargestellt, wo der obere Graph die Autokorrelationswerte für die Sequenz A = [0000 1100 1101 0100] und der untere Graph jene für die Sequenz B = [0001 1101 1101 0010] zeigt. A ist eine optimale Sequenz für konventionelle Synchronisationsverfahren, B für das vorliegende Synchronisationsverfahren. Wie daraus ersichtlich, sind die positiven Werte von B ausserhalb von Null sehr klein, d.h. es wird mittels Korrelation eine sehr zuverlässige Bestimmung der Position der Synchronisationssequenz möglich.

Bezugszeichenliste

1: A/D-Wandler
2: Demodulator
3a, 3b: Tiefpassfilter
4: Taktgeber
5: Rechenstufe
A, B: Synchronisationssequenzen
N: Anzahl kodierbare Werte pro Symbol
u, v: bitsynchronisierte Signale
$w_i$: zur Demodulierung verwendete Signalwerte
w(t): zur Synchronisation verwendetes Signal
$x_i$: übertragene Symbole
y: empfangenes Signal
y2r, y2i: Signale nach dem Tiefpassfilter
$\lambda$: gewählte Phasenverschiebung zwischen Abschnitten
$\tau$: Takt-Phasenverzögerung

**Patentansprüche**

1. Verfahren zur Synchronisation eines in DPSK modulierten Empfangssignals $y(t+\tau)$ mit einer in der Synchronisation zu bestimmenden Takt-Phasenverzögerung $\tau$, wobei ein Sendesignal y(t) in Abschnitten i einer Länge T eine Abfolge von binären Symbolen $\{x_i\}$ kodiert und die Form $y(t) = \cos(2\pi f_c t + \varphi(t))$ aufweist, mit einer Trägerfrequenz $f_c$ und einer Phasenverschiebung $\varphi(t)$, wobei jedem Abschnitt i eine Phasenverschiebung $\varphi_i$ zugeordnet ist und die Differenz aufeinander folgender Phasenverschiebungen gegeben ist durch

$$\varphi_i = \varphi_{i-1} + \lambda + F(x_i),$$

wobei F eine Funktion des Symbols $x_i$ ist, **dadurch gekennzeichnet**, dass für eine Vielzahl von Zeiten Werte

$$w(t) = \cos(\lambda) \cdot (y2r(t) \cdot y2r(t-T) + y2i(t) \cdot y2i(t-T)) +$$

$$\sin(\lambda) \cdot (y2i(t) \cdot y2r(t-T) - y2r(t) \cdot y2i(t-T))$$

bestimmt werden, wobei

$$y2r(t) = LP(y(t+\tau) \cdot \cos(2\pi f_c t)) \text{ und}$$

$$y2i(t) = LP(y(t+\tau) \cdot \sin(2\pi f_c t)),$$

wobei LP eine Tiefpass-Filterfunktion ist, die Frequenzkomponenten im Bereich $2f_c$ herausfiltert, und dass die Werte w(t) zur Synchronisation, d.h. zur Bestimmung der Takt-Phasenverzögerung $\tau$, verwendet werden.

2. Verfahren nach Anspruch 1, **dadurch gekennzeichnet**, dass die Werte w(t) abhängig von t mod T analysiert werden und die Takt-Phasenverzögerung $\tau$ daraus abgeleitet wird, für welches t mod T die Werte w(t) eine minimale oder maximale Streuung haben.

3. Verfahren nach Anspruch 1, **dadurch gekennzeichnet**, dass das Sendesignal y(t) eine Synchronisationssequenz enthält und dass die Takt-Phasenverzögerung $\tau$ aus der Korrelation von w(t) mit einer von der Synchronisationssequenz abgeleiteten Mustersequenz ermittelt wird.

4. Verfahren nach Anspruch 3, **dadurch gekennzeichnet**, dass die Synchronisationssequenz derart gewählt wird, dass deren positives Autokorrelationsmaximum ausserhalb Null minimal wird.

5. Verfahren nach einem der vorangehenden Ansprüche, **dadurch gekennzeichnet**, dass in jedem Abschnitt des Signals y(t) eine Vielzahl von Werten w(t) bestimmt werden.

6. Verfahren nach Anspruch 5, **dadurch gekennzeichnet**, dass die Werte w(t) in Zeitabständen dt gemessen werden, wobei dt << T.

7. Verfahren nach einem der vorangehenden Ansprüche, **dadurch gekennzeichnet**, dass $\lambda = 0$ oder $\lambda = \pi/2$.

8. Verfahren nach einem der vorangehenden Ansprüche, **dadurch gekennzeichnet**, dass jedes Symbol ein Bit kodiert, so dass $x_i = 0$ oder 1, und dass $F(x_i) = x_i \cdot \pi$.

**Fig. 1**

**Fig. 2**

**Fig. 3**

Fig. 4

Fig. 5

**Europäisches Patentamt**

## EUROPÄISCHER RECHERCHENBERICHT

Nummer der Anmeldung

EP 00 10 4808

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 4 896 336 A (HENELY STEVEN J ET AL) 23. Januar 1990 (1990-01-23) * Spalte 1, Zeile 7-10 * * Spalte 1, Zeile 51-68 * * Spalte 2, Zeile 39-65 * * Spalte 4, Zeile 25-52 * --- | 1-7 | H04L7/033 H04L27/227 H04L27/233 |
| A | US 4 715 047 A (HAMBLEY ALLAN R) 22. Dezember 1987 (1987-12-22) * Spalte 1, Zeile 6,7 * * Spalte 1, Zeile 44-65 * * Spalte 4, Zeile 13-48 * * Spalte 5, Zeile 33-45 * --- | 1-7 | |
| A | US 4 614 910 A (ISHIGAKI YUKINOBU ET AL) 30. September 1986 (1986-09-30) * Spalte 1, Zeile 11-20 * * Spalte 1, Zeile 51-65 * * Spalte 3, Zeile 34 – Spalte 4, Zeile 20 * ----- | 1-7 | |

| RECHERCHIERTE SACHGEBIETE (Int.Cl.7) |
|---|
| H04L |

Der vorliegende Recherchenbericht wurde für alle Patentansprüche erstellt

| Recherchenort | Abschlußdatum der Recherche | Prüfer |
|---|---|---|
| DEN HAAG | 15. August 2000 | Traverso, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 00 10 4808

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-08-2000

| Im Recherchenbericht angeführtes Patentdokument | Datum der Veröffentlichung | Mitglied(er) der Patentfamilie | | Datum der Veröffentlichung |
|---|---|---|---|---|
| US 4896336 A | 23-01-1990 | AU | 609632 B | 02-05-1991 |
| | | AU | 3925589 A | 01-03-1990 |
| | | CA | 1328681 A | 19-04-1994 |
| | | JP | 2105746 A | 18-04-1990 |
| | | JP | 2118193 C | 06-12-1996 |
| | | JP | 8021961 B | 04-03-1996 |
| US 4715047 A | 22-12-1987 | KEINE | | |
| US 4614910 A | 30-09-1986 | JP | 1604096 C | 22-04-1991 |
| | | JP | 2029262 B | 28-06-1990 |
| | | JP | 60190060 A | 27-09-1985 |
| | | JP | 1604097 C | 22-04-1991 |
| | | JP | 2029263 B | 28-06-1990 |
| | | JP | 60196049 A | 04-10-1985 |
| | | JP | 61030849 A | 13-02-1986 |
| | | DE | 3585332 A | 19-03-1992 |
| | | EP | 0154963 A | 18-09-1985 |

Für nähere Einzelheiten zu diesem Anhang : siehe Amtsblatt des Europäischen Patentamts, Nr. 12/82